# EUROPÄISCHE PATENTSCHRIFT

(11) **EP 0 814 237 B1**
(45) Veröffentlichungstag und Bekanntmachung des Hinweises auf die Patenterteilung: **14.08.2002**
(21) Anmeldenummer: 97109163.2
(22) Anmeldetag: 06.06.1997
(51) Int. Cl.: F01L 1/34, F02D 13/02

(54) **Ventilsteuerung für Brennkraftmaschinen**
Valve drive in an internal combustion engine
Commande de soupapes pour moteur à combustion interne

(30) Priorität: 18.06.1996 DE 19624230
(43) Veröffentlichungstag der Anmeldung: 29.12.1997
(73) Patentinhaber: Dr.Ing.h.c. F. Porsche Aktiengesellschaft, 70435 Stuttgart (DE); AB Volvo (pupl), 405 08 Göteborg (SE)
(72) Erfinder: Kerkau, Martin, 75443 Ötisheim (DE); Denbratt, Ingemar, 42933 Kullavik (SE); Rydquist, Jan-Erling, 42930 Kullavik (SE)

(56) Entgegenhaltungen:
- EP-A- 0 761 950
- GB-A- 2 134 596
- GB-A- 2 274 878
- US-A- 5 497 737

## Beschreibung

Die Erfindung betrifft eine Ventilsteuerung für einen Brennkraftmaschine nach dem Oberbegriff des Patentanspruches 1. Aus der US 5,497,737 ist bereits eine Brennkraftmaschine mit einem System zur Ansteuerung des Einlaß- und des Auslaßventils bekannt. Bei diesem bekannten System werden sowohl das Einlaß- als auch das Auslaßventil in ihren Öffnungszeiten beeinflußt.

Die Anforderungen an moderne Brennkraftmaschinen hinsichtlich möglichst geringer Abgaswerte steigen beständig an. Um diesen Anforderungen zu genügen, sind in der Regel den Brennkraftmaschinen Abgasreinigungsanlagen nachgeschaltet, insbesondere Katalysatoren, die die im Abgas enthaltenen Schadstoffe umwandeln. In diesem Zusammenhang tritt das Problem auf, daß die Schadstoffkonzentration stromab der Abgasreinigungsanlage natürlich umso geringer ist, je weniger Schadstoffe in den Abgasen direkt hinter der Brennkraftmaschine, die sogenannten Rohemissionen, vorhanden sind. Zum anderen stellt sich das Problem, daß Abgasreinigungsanlagen für ihre Wirksamkeit konstruktionsbedingt eine gewissen Betriebstemperatur benötigen. Ist diese Betriebstemperatur noch nicht erreicht, so ist die Reinigungswirkung gering oder nicht vorhanden, so daß in diesem Betriebsbereich die Rohemissionen die aus der Abgasanlage austretenden Schadstoffemissionen im wesentlichen bestimmt.

Aus der DE 35 06 107 A1 ist es bekannt, den Öffnungsbeginn des Auslaßventiles vorzuverlegen, um so dem Abgassystem und insbesondere dem Abgasreinigungssystem ein energiereicheres heißeres Abgas zuzuführen, was zu einer schnelleren Aufheizung des Abgasreinigungssystemes führen soll.

Aus der WO 91/16529 ist es bekannt, zusätzlich zu einer Einrichtung zur Vorverlegung des Öffnungsbeginnes des Auslaßventiles eine Einrichtung vorzusehen, mit der die Öffnungsdauer der Einlaßventile beeinflußt werden kann. Durch diese Einrichtung ist die abgebenene Motorleistung und hiermit die Abgastemperatur beeinflußbar.

Es ist Aufgabe der Erfindung, eine Ventilsteuerung für Brennkraftmaschinen zu schaffen, mit der die Rohemissionen vermindert werden können.

Der Erfindung liegt die Erkenntnis zugrunde, daß im Gegensatz zur im Stand der Technik vertretenen Auffassung ein frühes Schließen des Auslaßventiles, nämlich ein Schließen vor Erreichen des oberen Totpunktes, keinen Einfluß auf die Abgastemperatur und damit keinen Einfluß auf die Zeit hat, die das Abgasreinigungssystem benötigt, um seine Betriebstemperatur zu erreichen, sondern vielmehr die Rohemissionen der Brennkraftmaschine, hier besonders die Kohlenwasserstoff-Anteile, deutlich vermindert. Dieser Effekt ist im Bereich kleiner Lasten besonders ausgeprägt.

Erfindungsgemäß wird daher vorgeschlagen, das Schließen des Auslaßventiles soweit nach früh zu verstellen, daß das Auslaßventil geschlossen ist, bevor der Kolben den oberen Totpunkt erreicht. Dadurch wird im Brennraum ein definiertes Restgasvolumen zurückbehalten. Hiermit ist in vorteilhafter Weise erreicht, daß vor allem die Kohlenwasserstoff-Anteile in den Rohemissionen, jedoch auch die Stickoxid- und Kohlenmonoxid-Anteile vermindert sind, wobei es wesentlich ist, daß daß nur das Schließen des Auslaßventiles in der vorgeschriebenen Weise in Richtung "früh" verschoben wird.

In den Unteransprüchen sind vorteilhafte Weiterbildungen der Erfindung dargestellt.

So wird vorgeschlagen, die vorstehend beschriebenen Maßnahmen nur dann vorzunehmen, wenn die Last in der Brennkraftmaschine gering ist. Die Grenzlast der Brennkraftmaschine, bis zu der die Maßnahmen ergriffen werden, kann zusätzlich von der Temperatur der Brennkraftmaschine abhängig sein, um bei kalter Brennkraftmaschine und damit auch noch nicht betriebsbereitem Abgasreinigungssystem den Lastbereich zur Anwendung der beschriebenen Maßnahmen auszuweiten.

Die Erfindung ist nachstehend anhand des in den Figuren dargestellten Ausführungsbeispieles näher beschrieben.
Es zeigen:
Fig. 1 eine schematische Darstellung einer Brennkraftmaschine,
Fig. 2 ein erstes Beispiel einer Ventilsteuereinrichtung,
Fig. 3 ein zweites Beispiel einer Ventilsteuereinrichtung in einer Seitenansicht,
Fig. 4 das zweite Beispiel der Ventilsteuereinrichtung in einer Vorderansicht,
Fig. 5 ein drittes Beispiel für eine Ventilsteuereinrichtung in einer Seitenansicht,
Fig. 6 das dritte Ausführungsbeispiel für die Ventilsteuereinrichtung in einer Draufsicht, und
Fig. 7 ein Steuerzeitendiagramm für die Ventile der Brennkraftmaschine.

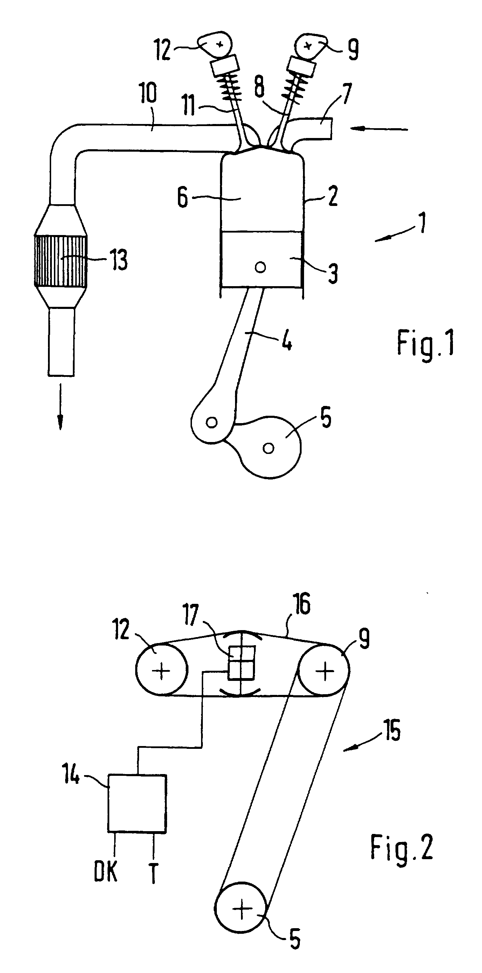

Die in Fig. 1 schematisch dargestellte Brennkraftmaschine 1 weist einen Zylinder 2 auf, an dem ein Kolben 3 längsbeweglich geführt ist. Über ein Pleuel 4 und eine Kurbelwelle 5 wird die Bewegung des Kolbens 3 in eine Drehbewegung der Kurbelwelle 5 umgesetzt. Ein im Zylinder 2 oberhalb des Kolbens 3 gebildeter Brennraum 6 wird durch einen Einlaßkanal 7 mit einem Luft-Kraftstoff-Gemisch gefüllt. Der Einlaßkanal 7 ist zum Brennraum 6 hin durch ein Einlaßventil 8 verschließbar. Das Einlaßventil 8 wird durch einen Einlaßnocken 9 betätigt.

Gegenüberliegend zum Einlaßkanal 7 ist ein Auslaßkanal 10 vorgesehen, der über ein Auslaßventil 11 zum Brennraum 6 hin abschließbar ist. Das Auslaßventil 11 wird durch einen Auslaßnocken 12 betätigt. Im Auslaßkanal 10 ist ein Katalysator 13 als Abgasreinigungsvorrichtung vorgesehen.

Wie in Fig. 2 schematisch dargestellt, sind der Einlaßnocken 9 und der Auslaßnocken 12 mittels eines Steuertriebes 15 mit der Kurbelwelle 5 verbunden. In dem in Fig. 2 dargestellten Ausführungsbeispiel ist der Einlaßnocken 9 unmittelbar mit der Kurbelwelle 5 gekoppelt, während der Auslaßnocken 12 mittelbar über ein zwischen dem Einlaßnocken 9 und dem Auslaßnocken 12 angeordneten Kettentrieb 16, auf den ein Stellelement 17 einwirkt, mit der Kurbelwelle 5 verbunden ist. Je nach Lage des Stellelementes 17 ist die Phasenlage des Auslaßnockens 12 zum Einlaßnocken 9 und damit zur Kurbelwelle 5 verschoben. Das Stellelement 17 wird dabei durch eine Steuereinrichtung 14 betätigt, die das Stellelement 17 abhängig von den Eingangsgrößen Last DK der Brennkraftmaschine 1 und Temperatur T des Katalysators 13 einstellt.

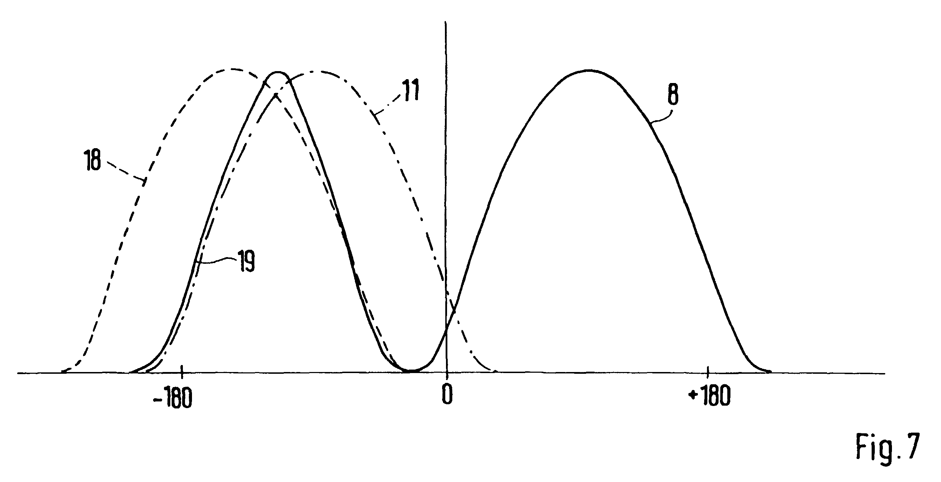

Fig. 7 zeigt in einem Steuerzeitendiagramm die Erhebungskurven für das Einlaßventil 8 und das Auslaßventil 11. Die an der X-Achse angetragenen Winkel beziehen sich auf die Winkelstellung der Kurbelwelle 5, wobei die Winkelposition 0° dann erreicht ist, wenn der Kolben 3 seinen oberen Totpunkt OT erreicht hat. In den vorliegenden Ausführungsbeispielen ist die Betätigung des Einlaßventiles 8 nicht veränderbar, während demgegenüber die Steuerzeiten und damit die Erhebungskurve des Auslaßventiles 11 durch die dargestellten Vorrichtungen verändert werden können.

Mittels der in Fig. 2 gezeigten Vorrichtung ist bei Betätigung des Stellelementes 17 eine bereits bekannte Erhebungskurve 18 in Fig. 7 erzielbar. Die Erhebungskurve 18 ist gegenüber der ursprünglichen Erhebungskurve des Auslaßventiles 11 insgesamt in Richtung "früh" verschoben,so daß sowohl das Öffnen als auch das Schließen des Auslaßventiles 11 in Richtung "früh" verschoben werden.

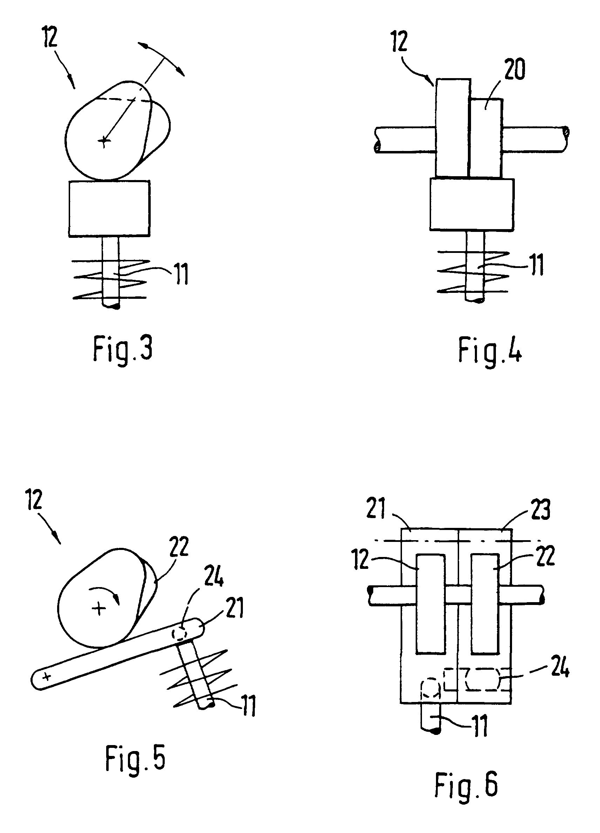

Bei dem in den Fig. 3 und 4 gezeigten zweiten Ausführungsbeispiel für die Betätigung des Auslaßventiles 11 sind nebeneinander zwei Auslaßnocken 12, 20 angeordnet. Der zweite Auslaßnocken 20 weist dieselbe Kontur wie der erste Auslaßnocken 12 auf, ist jedoch relativ zu diesem bewegbar. Eine derartige Bewegung wird ebenfalls von einer Steuereinrichtung 14, hier nicht dargestellt, ausgelöst. Bei verschobenem zweiten Auslaßnocken 20 wird die Erhebungskurve für den normalen Betrieb des Auslaßventiles 11 erzeugt. Wird auf einen Befehl der Steuereinrichtung 14 hin der zweite Auslaßnocken 20 relativ zum ersten Auslaßnocken 12 hinter diesen verschoben, so ergibt sich mit der gemeinsamen Kontur die in Fig. 7 mit 19 bezeichnete Erhebungskurve, bei der nur das Schließen des Auslaßventiles 11 in Richtung "früh" bezogen auf den oberen Totpunkt OT verschoben ist, während der Öffnungsbeginn des Auslaßventiles 11 unverändert bleibt.

In den Fig. 5 und 6 ist schließlich ein drittes Ausführungsbeispiel für eine Ventilbetätigung dargestellt. Das Auslaßventil 11 ist nunmehr über einen Schlepphebel 21 betätigt, der seinerseits vom Auslaßnocken 12 betätigt wird. Parallel zu dem Auslaßnocken 12 ist ein weiterer Auslaßnocken 22 angeordnet, der auf einen zweiten Schlepphebel 23 einwirkt. Mittels einer Verbindungseinrichtung 24 kann der zweite Schlepphebel 23 mit dem ersten Schlepphebel 21 gekoppelt werden. Durch diese Koppelung wird nunmehr das Auslaßventil 11 entsprechend der jeweils größeren Kontur des weiteren Auslaßnockens 22 betätigt. Auch in diesem Ausführungsbeispiel wird die Verbindungseinrichtung durch die nicht näher gezeigte Steuereinrichtung 14 betätigt.

Im Normalzustand ist die Verbindungseinrichtung 24 betätigt, und das Auslaßventil 11 wird nur durch den weiteren Auslaßnocken 22 betätigt; demzufolge ist die Erhebungskurve 11 wirksam. Bei gelöster Verbindungseinrichtung 24 hingegen ist der erste Auslaßnocken 12 wirksam, der eine etwas kleinere Außenkontur mit einem früheren Schließen des Auslaßventiles 11 aufweist. Dies führt im Steuerzeitendiagramm nach Fig. 7 zur Erhebungskurve 19, nach der das Schließen des Auslaßventiles 11 nach "früh" verschoben ist.

In den gezeigten drei Ausführungsbeispielen wird mittels der Steuereinrichtung 14 eine Verschiebung der Steuerung des Auslaßventiles 11 nach "früh" hin dann vorgenommen, wenn sich die Brennkraftmaschine 1 in Bereichen kleiner Last DK befindet, wo die Verschiebung hinsichtlich der Verminderung der Schadstoffanteile im Abgas stromauf des Katalysators 13 besonders wirkungsvoll ist. Solange die Brennkraftmaschine 1 und der Katalysator 13 ihre Betriebstemperatur noch nicht erreicht haben und daher der Katalysator 13 noch nicht in der Lage ist, die Schadstoffanteile wirkungsvoll zu reduzieren, wird ferner durch die Steuereinrichtung 14 der Bereich der Last DK, in dem eine Verschiebung der Steuerung vorgenommen wird, zu höheren Lasten hin erweitert. In allen anderen Betriebsbereichen werden die ursprünglich gewählten Steuerzeiten der Brennkraftmaschine 1 zu verwendet.

Bei durchgeführten Untersuchungen lag das Auslaßmittel, d.h. der höchste Punkt der Erhebungskurve, für das Auslaßventil 11 im Steuerzeitendiagramm nach Fig. 7 bei 87° Kurbelwellenwinkel vor dem oberen Totpunkt. Eine Verschiebung bis zu einem Auslaßmittel von ca. 130° Kurbelwellenwinkel vor OT blieb ohne Wirkung. Erst bei einem Auslaßmittel von 135° Kurbelwellenwinkel und größer vor OT werden die HC-Emissionen drastisch reduziert.

Im Zusammenhang mit den Gesamtemissionen des Fahrzeuges ist es dabei von besonderem Vorteil, daß die HC-Emissionen nicht nur in der ersten Leerlaufphase der Brennkraftmaschine nach dem Start vermindert werden, sondern daß darüber hinaus auch der HC-Spitzenwert gänzlich vermieden wird, der bei unveränderter Steuerung des Auslaßventiles 11 üblicherweise auftritt. In Folge dessen ist insbesondere für Prüfprozeduren für Abgasreinigungssysteme die Gesamtemissionsmenge die im Verlauf der Prüfprozedur erfaßt wird, deutlich vermindert.

Die dabei erzielte Reduktion der HC-Emissionen ist damit zu begründen, daß durch das Schließen der Auslaßventile 11 vor dem Erreichen des oberen Totpunktes OT ein fest definierter Restgasanteil im Brennraum 6 verbleibt. Dieser Restgasanteil führt zu einer höheren Temperatur des Frischgasgemisches und damit zu einer besseren Gemischaufbereitung und Verbrennung. Diese Überlegungen wurden dadurch bestätigt, daß bei Messungen an einer erfindungsgemäß betriebenen Brennkraftmaschine ein sehr ausgeglichener Verlauf des Lambdawerte des Abgases erzielt werden konnte.

Wird gleichzeitig das Öffnen des Auslaßventiles 11 in Richtung "früh" verschoben, so führt zusätzlich der höhere Druckgradient beim Öffnen des Auslaßventiles 11 zu einer höheren Gasgeschwindigkeit im Auslaßkanal 10 und damit zu besseren Sekundärreaktionen der Abgas-Bestandteile.

## Patentansprüche

1. Ventilsteuerung für eine Brennkraftmaschine (1), wobei ein in einem Zylinder (2) oberhalb eines Kolbens (3) gebildeter Brennraum (6) des Ottomotors (1) durch zumindest ein Einlaßventil (8) und durch zumindest ein Auslaßventil (11) verschließbar ist, **dadurch gekennzeichnet, daß** zur Minderung der Rohemissionen des Ottomotors (1) das Schließen des Auslaßventiles (11) so weit nach "früh" zu verstellen ist, daß das Auslaßventil (11) geschlossen ist, bevor der Kolben den oberen Totpunkt erreicht, wobei das Verstellen des Schließens des Auslaßventiles (11) in Richtung "früh" verschoben wird, während der Öffnungsbeginn des Auslaßventiles unverändert bleibt.

2. Ventilsteuerung nach Anspruch 1, **dadurch gekennzeichnet, daß** das Verstellen des Schließens des Auslaßventiles (11) in einem vorgegebenen Lastbereich (DK) des Ottomotors (1) erfolgt.

3. Ventilsteuerung nach Anspruch 2, **dadurch gekennzeichnet, daß** der Lastbereich (DK) des Ottomotors, in dem das Schließen des Auslaßventiles (11) verstellt ist, abhängig von der Temperatur des Ottomotors (1), eines dem Ottomotor (1) nachgeschalteten Abgasreinigungssystemes oder beidem erfolgt.

## Claims

1. Valve timing for an internal-combustion engine (1), wherein a combustion chamber (6) - formed in a cylinder (2) above a piston (3) - of the spark-ignition engine (1) can be closed by at least one intake valve (8) and by at least one exhaust valve (11), **characterized in that,** in order to reduce the untreated emissions from the spark-ignition engine (1), the closing of the exhaust valve (11) is set so far towards "early" that the exhaust valve (11) is closed before the piston reaches top dead centre, the setting of the closing of the exhaust valve (11) being shifted in the direction towards "early", whereas the beginning of the opening of the exhaust valve remains unchanged.

2. Valve timing according to Claim 1, **characterized in that** the setting of the closing of the exhaust valve (11) takes place in a pre-determined load range **(DK)** of the spark-ignition engine (1).

3. Valve timing according to Claim 2, **characterized in that** the load range **(DK)** of the spark-ignition engine, in which the closing of the exhaust valve (11) is set, is dependent upon the temperature of the spark-ignition engine (1), an exhaust-gas cleaning system arranged downstream of the spark-ignition engine (1) or both.

## Revendications

1. Commande de soupapes pour un moteur à combustion interne (1), une chambre de combustion (6) du moteur à explosion (1), formée dans un cylindre (2) au-dessus d'un piston (3), pouvant être fermée par au moins une soupape d'admission (8) et par au moins une soupape d'échappement (11), **caractérisée en ce que** pour réduire les émissions brutes du moteur à explosion (1), la fermeture de la soupape d'échappement (11) doit être réglée suffisamment dans le sens de 1"'avance" pour que la soupape d'échappement (11) soit fermée avant que le piston n'atteigne le point mort haut, le réglage de la fermeture de la soupape d'échappement (11) dans le sens "avance" étant opéré, pendant que le début de l'ouverture de la soupape d'échappement reste inchangé.

2. Commande de soupapes selon la revendication 1, **caractérisée en ce que** le réglage de la fermeture de la soupape d'échappement (11) s'effectue dans un domaine de charge (DK) donné du moteur à explosion (1).

3. Commande de soupapes selon la revendication 2, **caractérisée en ce que** le domaine de charge (DK) du moteur à explosion, dans lequel est réglée la fermeture de la soupape d'échappement (11), s'effectue en fonction de la température du moteur à explosion (1), en fonction d'un système d'épuration des gaz d'échappement monté en aval du moteur à explosion (1), ou des deux.
